# FASCICULE DE BREVET EUROPEEN

(11) **EP 0 940 337 B1**
(45) Date de publication et mention de la délivrance du brevet: **19.11.2003**
(21) Numéro de dépôt: 99400480.2
(22) Date de dépôt: 01.03.1999
(51) Int. Cl.: B64D 27/26

(54) **Dispositif d'accrochage d'un moteur sur un pylone d'aéronef**
Befestigungsvorrichtung für einen Triebwerkträger eines Flugzeuges
Pylon mounting arrangement for an aircraft engine

(30) Priorité: 02.03.1998 FR 9802483
(43) Date de publication de la demande: 08.09.1999
(73) Titulaire: AIRBUS France, 31060 Toulouse Cedex 03 (FR)
(72) Inventeur: Le Blaye, Sébastien, 31620 Villaudric (FR)
(74) Mandataire: Poulin, Gérard

(56) Documents cités:
- EP-A- 0 249 553
- EP-A- 0 583 158
- US-A- 4 044 973

## Description

### Domaine technique

L'invention concerne un dispositif d'accrochage d'un moteur d'aéronef sur un pylône fixé à une structure de l'aéronef telle qu'une aile ou un élément de fuselage.

De façon plus précise, l'invention concerne un dispositif d'accrochage chargé de reprendre des efforts de poussée, latéraux, verticaux et de couple moteur engendrés par le moteur et devant être retransmis à l'aéronef par l'intermédiaire du pylône.

### Etat de la technique

Chacun des moteurs qui équipent les aéronefs est suspendu ou accroché latéralement à un pylône, lui-même fixé respectivement sous la voilure ou sur le fuselage de l'aéronef.

Les systèmes d'accrochage qui relient les moteurs aux pylônes sont généralement composés de deux ou trois dispositifs d'accrochage séparés. L'un de ces dispositifs est chargé de reprendre les efforts de poussée, latéraux, verticaux et de couple moteur, qui sont engendrés par le moteur, pour les retransmettre à l'aéronef par l'intermédiaire du pylône.

Dans l'état actuel de la technique, les dispositifs d'accrochage assurant la reprise des efforts de poussée, latéraux, verticaux et de couple moteur comprennent principalement une ferrure monolithique ou monobloc, sensiblement en arc de cercle. Cette structure est fixée au pylône dans sa partie centrale et reliée au moteur à chacune de ses extrémités, par une pièce d'accrochage également monobloc. Un dispositif d'accrochage de ce type est décrit, par exemple, dans le document US-A-4 044 973.

Du fait du caractère monolithique ou monobloc de la ferrure et des pièces d'accrochage, une défaillance de l'une quelconque de ces pièces est susceptible de remettre en cause l'intégrité du dispositif d'accrochage dans son ensemble, affectant ainsi gravement la sécurité de l'aéronef.

Afin de supprimer ce risque, certains dispositifs d'accrochage perfectionnés ajoutent à la structure décrite précédemment une liaison supplémentaire entre la partie centrale de la ferrure et le moteur. Cette liaison supplémentaire dispose de suffisamment de jeu pour ne pas travailler lors du fonctionnement normal du dispositif d'accrochage. En revanche, elle entre en fonction lors d'une rupture d'un élément quelconque de ce dispositif.

Un dispositif d'accrochage d'un moteur sur un pylône est connu de EP-A-0 249 553, qui montre toutes les caractéristiques du préambule de la revendication indépendante

Les dispositifs d'accrochage perfectionnés comprenant une telle liaison supplémentaire présentent cependant un certain nombre d'inconvénients.

En premier lieu, la liaison supplémentaire n'est généralement pas dimensionnée pour répondre aux exigences de la réglementation, qui impose qu'une telle liaison puisse tenir pendant les milliers d'heures de vol correspondant à l'intervalle d'inspection défini par cette réglementation, pour l'aéronef considéré.

De plus, cette solution nécessite de prévoir un troisième point d'accrochage sur le moteur, ce qui entraîne une modification de celui-ci.

En réalité, la liaison supplémentaire introduite dans certains dispositifs d'accrochage perfectionnés existants ne constitue qu'une liaison de sécurité rudimentaire, destinée uniquement à permettre un retour au sol de l'aéronef dans des conditions minimales de sécurité. Cette liaison est donc incapable de répondre aux nouvelles exigences fixées par les autorités de certification concernant l'intégrité du dispositif.

### Exposé de l'invention

L'invention a pour but de résoudre, de façon sûre et durable, les problèmes de sécurité posés par les dispositifs d'accrochage de moteurs d'avions existants, sans pour autant entraîner une quelconque modification des moteurs.

En d'autres termes, l'invention a pour objet un dispositif d'accrochage d'un moteur d'aéronef, dont la conception originale lui permet de préserver son intégrité et, par conséquent, de ne pas remettre en cause la sécurité de l'aéronef, en cas de défaillance de l'un de ses éléments constitutifs, sans qu'il soit nécessaire d'ajouter une liaison supplémentaire aux deux liaisons reliant habituellement la ferrure au moteur.

Conformément à l'invention, ce résultat est obtenu au moyen d'un dispositif d'accrochage d'un moteur sur un pylône fixé à un aéronef, ce dispositif comprenant une ferrure sensiblement en arc de cercle, pourvue d'une partie centrale fixée au pylône et de deux parties d'extrémité aptes à être reliées au moteur par des moyens de liaison, caractérisé par le fait que la partie centrale et les parties d'extrémité de la ferrure sont formées à la fois dans deux portions élémentaires de celle-ci, aptes à transmettre individuellement au pylône les charges engendrées par le moteur, la ferrure étant seulement reliée au moteur par lesdits moyens de liaison, et chacun de ceux-ci incluant une pièce d'attente, non travaillante en fonctionnement normal, apte à transmettre lesdites charges en cas de rupture d'une autre pièce des moyens de liaison.

Les deux portions élémentaires de la ferrure, qui peuvent être réalisées sous la forme d'une pièce unique ou sous la forme de deux pièces séparées, assurent la redondance de la partie du dispositif constituée par la ferrure.

Par ailleurs, la pièce d'attente intégrée dans chacune des deux liaisons prévues entre la ferrure et le moteur, assure la redondance de ces liaisons.

Le but recherché est ainsi atteint, quelle que soit la nature de la pièce éventuellement défaillante, sans qu'aucune modification du moteur soit nécessaire.

Dans une forme de réalisation préférée de l'invention, les deux portions élémentaires de la ferrure sont constituées par deux pièces séparées, reliées l'une à l'autre par des moyens de fixation répartis sur toute la longueur de ces pièces.

Les moyens de fixation reliant les pièces séparées de la ferrure peuvent notamment comprendre des boulons qui traversent ces pièces.

Chacune des portions élémentaires de la ferrure est elle-même fixée au pylône par au moins deux vis de traction. La redondance recherchée est ainsi également obtenue dans la liaison prévue entre chacune des portions de la ferrure et le pylône.

Dans la forme de réalisation préférée de l'invention, chacun des deux moyens de liaison comprend un bloc amortisseur, fixé au moteur par un ensemble de vis de traction et pénétrant dans une chape femelle formée dans une partie d'extrémité correspondante de la ferrure, un axe traversant sans jeu le bloc amortisseur et, de part et d'autre de celui-ci, des flancs de ladite chape femelle, formés dans chacune des deux portions élémentaires de la ferrure.

La pièce d'attente non travaillante est alors avantageusement constituée par une plaque, fixée entre le bloc amortisseur et le moteur par les vis de traction précitées, et reliée aux deux portions élémentaires de la ferrure par une articulation avec jeu.

L'articulation avec jeu est alors, de préférence, une articulation de type charnière, incluant des chapes multiples formées sur les deux pièces constituées par la pièce d'attente et par la ferrure, ces chapes multiples s'entrecroisant avec jeu. Un deuxième axe traverse les chapes multiples en étant fixé à l'une des deux pièces et en traversant l'autre avec jeu.

Selon une autre forme de réalisation de l'invention, l'axe reliant le bloc amortisseur à l'une des deux parties d'extrémité de la ferrure est un axe extérieur creux, traversé avec jeu par un axe intérieur formant la pièce d'attente, non travaillante.

Dans ce cas, trois variantes différentes peuvent être envisagées.

Selon une première variante, une plaque à section en forme de U entoure simultanément les deux portions élémentaires de la ferrure, à chaque partie d'extrémité de celle-ci incluant ladite chape femelle, ladite plaque étant fixée aux deux portions élémentaires de la ferrure, en dehors de ladite chape, par une série de boulons qui traversent successivement les deux portions élémentaires et, de part et d'autre de celles-ci, deux ailes de ladite plaque, l'axe extérieur creux traversant également sans jeu chacune desdites ailes de la plaque.

Selon une deuxième variante, deux plaques sensiblement planes sont fixées de part et d'autre de chaque partie d'extrémité de la ferrure, en dehors de ladite chape femelle, par un ensemble de boulons qui traversent successivement les deux portions élémentaires de la ferrure et, de part et d'autre de celles-ci, lesdites plaques, l'axe- extérieur creux traversant également sans jeu chacune des plaques.

Enfin, selon une troisième variante, chacune des portions élémentaires de la ferrure comporte, à chaque partie d'extrémité de celle-ci, une chape femelle séparée dans laquelle pénètre une partie du bloc amortisseur, les deux chapes femelles et les deux parties du bloc amortisseur étant traversées par ledit axe extérieur creux.

### Brève description des dessins

On décrira à présent, à titre d'exemples non limitatifs, différentes formes de réalisation de l'invention, en se référant aux dessins annexés, dans lesquels :
- la figure 1 est une vue de face qui représente un dispositif d'accrochage de moteur d'avion selon une première forme de réalisation de l'invention ;
- la figure 2 est une vue de dessous, en perspective, qui représente la moitié droite du dispositif de la figure 1 ;
- la figure 3 est une vue de dessus, en perspective, qui représente la moitié gauche du dispositif de la figure 1 ;
- la figure 4 est une vue de face, fragmentaire, illustrant une deuxième forme de réalisation du dispositif selon l'invention ;
- la figure 5 est une vue en coupe selon la ligne V-V de la figure 4 ;
- la figure 6 est une vue comparable à la figure 4, illustrant une variante de la deuxième forme de réalisation de l'invention ;
- la figure 7 est une vue en coupe selon la ligne VII-VII de la figure 6 ;
- la figure 8 est une vue comparable aux figures 4 et 6, illustrant une autre variante de la deuxième forme de réalisation de l'invention ; et
- la figure 9 est une vue en coupe selon la ligne IX-IX de la figure 8.

### Description détaillée de plusieurs formes de réalisation de l'invention

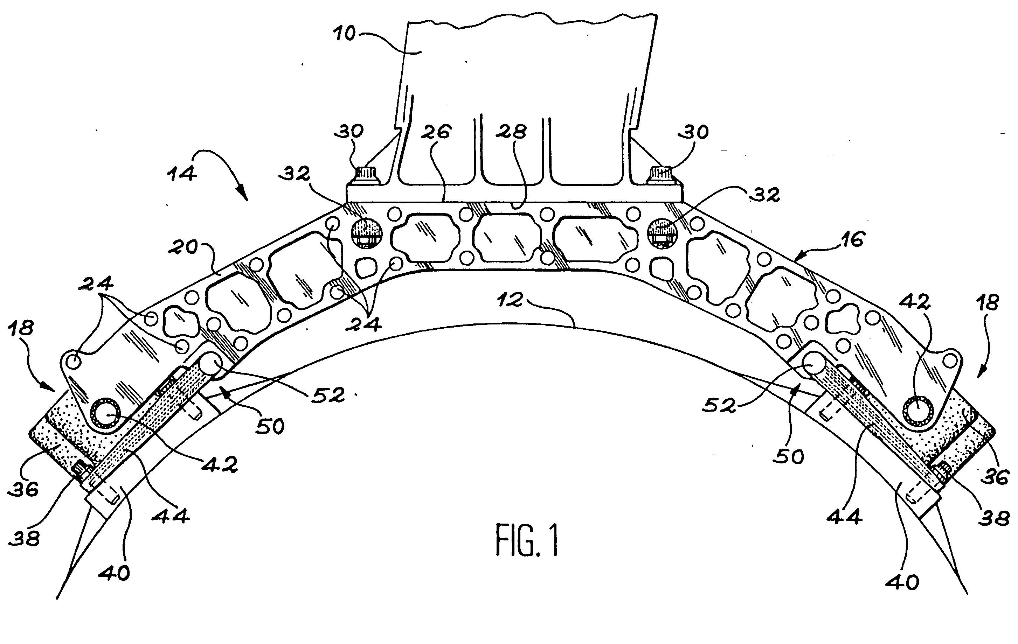

Sur la figure 1, la référence 10 désigne un pylône prévu pour être fixé, de façon connue, à une structure d'un aéronef, telle qu'une aile ou un élément du fuselage de celui-ci. Plus précisément, la référence 10 correspond à la partie du pylône conçue pour reprendre les efforts de poussée, latéraux, verticaux et de couple moteur qui sont engendrés par un moteur (non représenté) afin que ces efforts soient retransmis à l'aéronef par l'intermédiaire du pylône 10.

Par ailleurs, sur la figure 1 la référence 12 désigne une pièce annulaire qui fait partie intégrante de la structure non tournante du moteur, ou qui est prévue pour être fixée sur cette structure selon des techniques connues, qui ne font pas partie de l'invention. Seule la partie de la pièce 12 adjacente au pylône 10 est illustrée. Il est à noter que la pièce 12, par laquelle le moteur est accroché au pylône 10, peut être située indifféremment à l'avant ou à l'arrière du moteur, les dimensions des différentes pièces étant adaptées en conséquence.

La liaison entre le pylône 10 et la pièce 12 est assurée par un dispositif d'accrochage 14 conforme à l'invention. Il est rappelé que ce dispositif d'accrochage 14 a pour fonction de reprendre les efforts de poussée, latéraux, verticaux et de couple moteur, pour les retransmettre à la structure de l'aéronef au travers du pylône 10. Tous les autres efforts sont transmis par d'autres dispositifs d'accrochage (non représentés) qui peuvent être réalisés selon différentes techniques connues et ne font pas partie de l'invention.

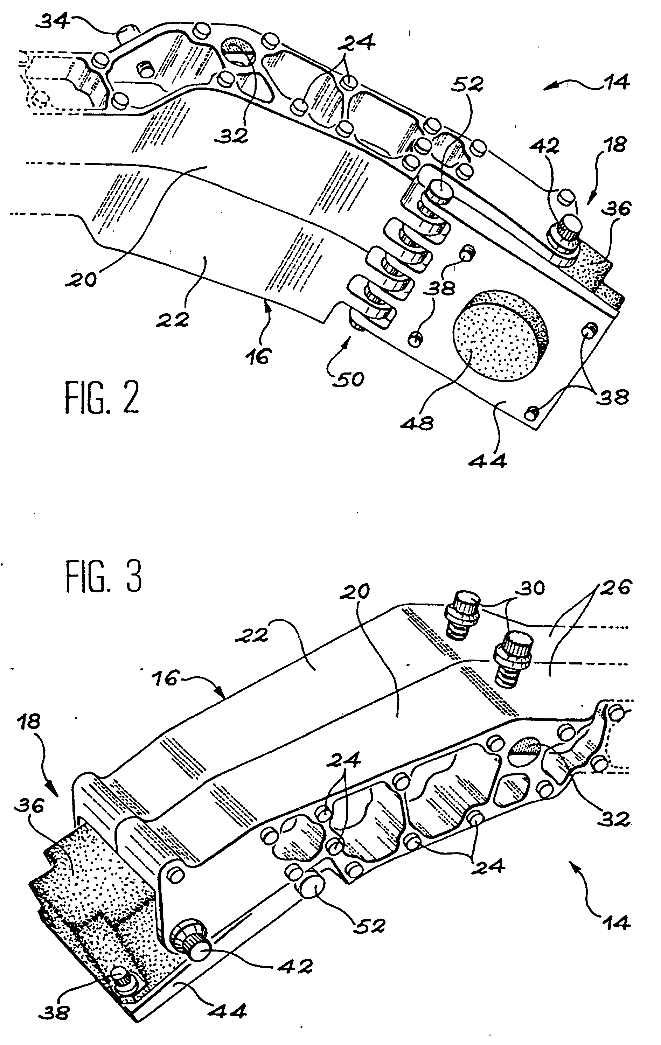

Le dispositif d'accrochage 14 est symétrique par rapport à un plan passant par l'axe du moteur. Pour cette raison, les mêmes références numériques sont utilisées pour désigner des pièces identiques, symétriques par rapport à ce plan. Les vues en perspective des figures 2 et 3 s'appliquent donc indifféremment à l'une ou l'autre des parties d'extrémité du dispositif d'accrochage 14 situées de part et d'autre de son plan de symétrie.

Le dispositif d'accrochage 14 conforme à l'invention comprend une ferrure 16, sensiblement en arc de cercle en vue de face, c'est-à-dire observée selon l'axe du moteur. Le dispositif d'accrochage 14 comprend également des moyens de liaison 18 reliant chacune des extrémités de la ferrure 16 à la pièce annulaire 12 liée au moteur.

Comme l'illustrent en particulier les figures 2 et 3, la ferrure 16 est formée de deux pièces séparées 20 et 22, en arc de cercle. Ces deux pièces 20 et 22 sont accolées l'une à l'autre selon un plan perpendiculaire à l'axe du moteur, et elles présentent une symétrie miroir par rapport à ce plan. Les deux pièces 20 et 22 formant la ferrure 16 sont reliées l'une à l'autre par des moyens de fixation constitués par un ensemble de boulons 24 qui traversent successivement les deux pièces sur toute leur épaisseur, parallèlement à l'axe du moteur. Ces boulons 24 sont répartis sur toute la longueur et sur toute la largeur des pièces 20 et 22, comme le montrent les figures 1 à 3.

Selon une caractéristique de l'invention, chacune des pièces 20 et 22 formant la ferrure 16 est dimensionnée de façon à pouvoir transmettre individuellement au pylône 10 les charges maximales susceptibles d'être engendrées par le moteur lorsque l'aéronef est en vol.

Dans une variante de réalisation non représentée, le même résultat peut être obtenu en réalisant la ferrure 16 en une seule pièce incluant deux portions élémentaires en arc de cercle, dont la structure et le comportement mécanique sont comparables à ceux des pièces séparées 20 et 22. Ces deux portions élémentaires sont alors reliées l'une à l'autre par des parties de liaison réalisées d'un seul tenant avec les deux portions élémentaires et remplissant la même fonction que les boulons 24. Ces parties de liaison peuvent notamment être disposées partiellement ou totalement selon le contour des deux portions élémentaires, ou en tout autre emplacement approprié. Elles permettent à la ferrure 16 de se comporter comme une pièce unique, tout en préservant l'intégrité de l'autre portion élémentaire lorsque l'une desdites portions est défaillante.

Dans sa partie centrale, la ferrure 16 présente une face extérieure plane 26 (figures 1 et 3), prévue pour être fixée contre une face plane 28 (figure 1) du pylône 10. Comme le montre la figure 3, la face plane 26 est formée pour moitié sur la pièce 20 et pour moitié sur la pièce 22.

La fixation de la ferrure 16 sur le pylône 10 est assurée par quatre vis de traction 30. Ces vis de traction 30 traversent des alésages en vis-à-vis formés dans le pylône 10 et dans chacune des pièces 20 et 22 de la ferrure 16, pour venir se visser dans quatre écrous à barillets 32, logés par paires dans des alésages traversant successivement les pièces 20 et 22, parallèlement à l'axe du moteur. Le blocage est assuré par la venue en appui des têtes des vis 30 contre des surfaces prévues à cet effet sur le pylône 10.

De façon plus précise et comme l'illustrent en particulier les figures 1 et 3, deux des vis 30 et deux des écrous 32 assurent la fixation de chacune des pièces 20 et 22 de la ferrure 16 sur le pylône 10.

Les efforts de cisaillement entre les pièces 20 et 22 de la ferrure 16 et le pylône 10 sont repris par un doigt 34 (figure 2) travaillant uniquement en cisaillement. Dans la forme de réalisation illustrée sur la figure 2, le doigt 34 est fixé dans un trou du pylône 10 et emmanché dans un trou en vis-à-vis usiné dans la pièce 22 de la ferrure 16.

A l'inverse, le doigt 34 pourrait être fixé à l'une ou l'autre des pièces de la ferrure et emmanché dans un trou du pylône.

Conformément à l'invention, les liaisons entre la ferrure 16 et la pièce annulaire 12 liée au moteur sont limitées à deux points de liaison matérialisés par les moyens de liaison 18 qui sont interposés entre les parties d'extrémité de la ferrure 16 et la pièce 12.

Dans la première forme de réalisation de l'invention illustrée sur les figures 1 à 3, chacun des moyens de liaison 18 comprend un bloc amortisseur 36, destiné à éviter que d'éventuelles vibrations du moteur ne soient transmises à la ferrure 16. Les blocs amortisseurs 36 peuvent présenter une structure quelconque apte à remplir la fonction désirée, selon des techniques connues de l'homme du métier.

Chacun des blocs amortisseurs 36 est fixé, par exemple au moyen de quatre vis de traction 38, sur une embase 40 prévue à cet effet sur la pièce annulaire 12 liée au moteur.

Par ailleurs, chacun des blocs amortisseurs 36 pénètre dans une chape femelle formée dans une partie d'extrémité de la ferrure 16. Plus précisément, chaque bloc amortisseur 36 est relié à la chape femelle correspondante par un axe 42, orienté parallèlement à l'axe du tambour. Cet axe 42 traverse sans jeu le bloc amortisseur 36 et, de part et d'autre de celui-ci, les deux flancs de la chape femelle précités, formés respectivement dans chacune des pièces séparées 20 et 22.

Dans la forme de réalisation illustrée sur les figures 1 à 3, une pièce d'attente constituée par une plaque 44 est interposée entre chacun des blocs amortisseurs 36 et l'embase 40 sur laquelle ce bloc est fixé. Plus précisément, la plaque 44 est fixée entre le bloc amortisseur 36 et l'embase 40 par les quatre vis 38, qui traversent quatre trous prévus à cet effet dans la plaque 44.

Afin que les vis 38 ne travaillent qu'en traction, le bloc amortisseur 36 comporte une partie en saillie 48 (figure 2), par exemple en forme de cylindre, qui traverse un trou circulaire formé à cet effet dans la plaque 44 et s'emboîte sans jeu dans un logement complémentaire (non représenté) prévu sur l'embase 40. La partie en saillie 48 de chacun des blocs amortisseurs 36 reprend ainsi les efforts de cisaillement.

En outre et comme l'illustre en particulier la figure 2, chacune des plaques 44 est reliée aux deux pièces 20 et 22 de la ferrure 16 par une articulation avec jeu 50, de type charnière.

Cette articulation 50 comprend un axe 52 qui traverse de part en part des chapes multiples formées sur la plaque 44 et sur les pièces 20 et 22 et s'entrecroisant avec jeu. L'axe 52 est orienté parallèlement à l'axe du moteur. Il peut notamment être fixé à la plaque 44 et traverser avec jeu les chapes formées dans les pièces 20 et 22 de la ferrure 16. Un agencement inverse peut être utilisé, sans sortir du cadre de l'invention.

Les jeux prévus dans l'articulation 50 sont dimensionnés afin que celle-ci ne transmette aucun effort et ne soit pas travaillante lorsque le dispositif fonctionne normalement.

Il est à noter que l'articulation de type charnière 50 peut être remplacée par une articulation simple entre une chape mâle et une chape femelle, sans sortir du cadre de l'invention.

Le dispositif d'accrochage conforme à l'invention, qui vient d'être décrit en se référant aux figures 1 à 3, assure la transmission des efforts de poussée, latéraux, verticaux et de couple moteur entre le moteur et le pylône, en utilisant seulement deux points d'ancrage sur le moteur et selon un agencement tel que la défaillance de l'un quelconque des éléments constitutifs du dispositif ne remette pas en cause l'intégrité de celui-ci.

Ainsi, en cas de rupture d'un élément simple tel qu'un bloc amortisseur 36 ou un axe 42, ou encore en cas de défaillance de l'une des chapes formant les parties d'extrémité de la ferrure 16, la liaison et le transfert des efforts entre le moteur et les deux pièces 20 et 22 formant la ferrure 16 sont toujours assurés, au travers de l'articulation 50 et de la plaque 44, après rattrapage des jeux. Ce raisonnement est applicable à chacune des extrémités du dispositif. L'intégrité du dispositif est également préservée en cas de défaillance de l'une ou l'autre des deux pièces 20 et 22 formant la ferrure 16. Par conséquent, quelle que soit la pièce défaillante, le moteur reste maintenu de façon sûre en positionnement normal de fonctionnement.

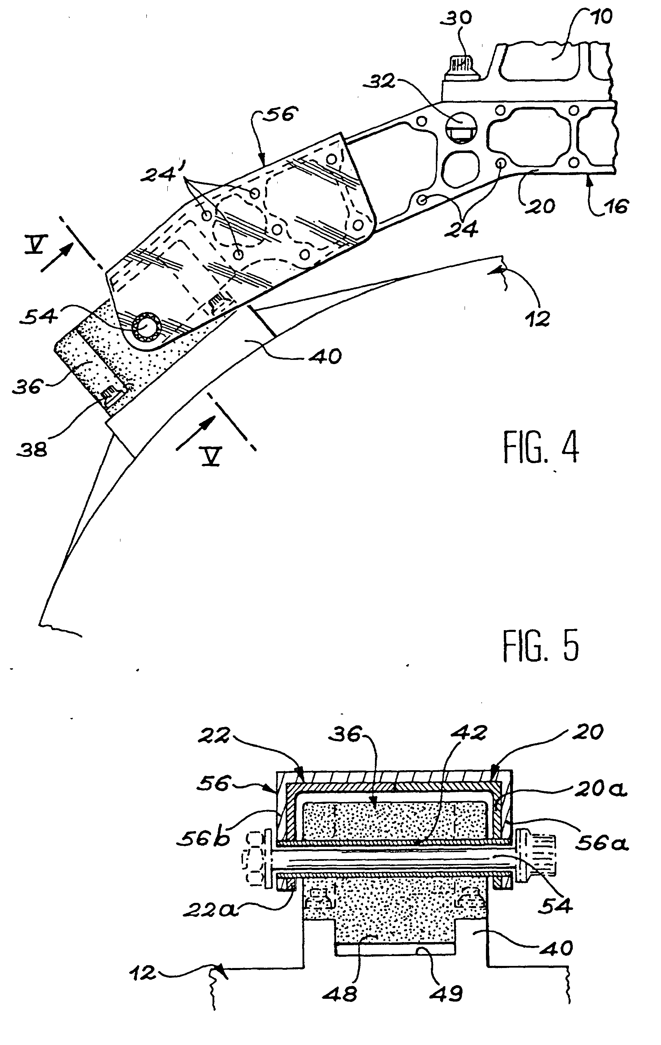

On décrira à présent en se référant successivement aux figures 4 à 9 une deuxième forme de réalisation de l'invention, dans laquelle les plaques 44 sont supprimées. Cette deuxième forme de réalisation n'est applicable que dans le cas où les blocs amortisseurs 36 ne présentent pas en eux-mêmes de risque de rupture ou sont conçus intrinsèquement de façon redondante.

Dans la forme de réalisation illustrée sur les figures 4 à 9, chacun des blocs amortisseurs 36 est fixé directement sur une embase correspondante 40 de la pièce 12, au moyen de quatre vis 38. On voit notamment sur les figures 5, 7 et 9 que la partie en saillie 48 de chacun des blocs amortisseurs 36 s'emboîte sans jeu dans un évidement 49 de l'embase 40.

Par ailleurs, l'axe 42 qui assure la liaison sans jeu entre chaque bloc amortisseur 36 et les pièces 20 et 22 formant la ferrure 16 est un axe extérieur creux. Cet axe extérieur creux 42 est traversé avec un jeu prédéterminé, aussi bien dans le sens radial que dans le sens axial, par un axe intérieur 54. Cet axe 54 forme une pièce d'attente, non travaillante en fonctionnement normal. Il est dimensionné de façon à pouvoir transmettre les charges maximales susceptibles d'être engendrées en vol par le moteur, en cas de rupture de l'axe extérieur creux 42, après rattrapage des jeux.

Dans la variante de cette deuxième forme de réalisation de l'invention illustrée sur les figures 4 et 5, les deux pièces séparées 20 et 22 formant la ferrure 16 sont entourées simultanément, dans leurs parties d'extrémité incluant la chape femelle dans laquelle pénètre le bloc amortisseur 36, par une plaque 56 à section en forme de U. Dans sa partie qui n'entoure pas la chape femelle formée dans la ferrure 16, la plaque 56 est fixée aux deux pièces 20 et 22 de la ferrure par une série de boulons 24'. Ces boulons 24' sont des boulons comparables aux boulons 24 qui relient l'une à l'autre les deux pièces 20 et 22. Ils traversent à la fois les flancs 20a et 22a des pièces 20 et 22 et les deux ailes 56a et 56b de la plaque 56 (figure 5) .

De plus et comme l'illustre notamment la figure 5, l'axe extérieur creux 42 traverse également sans jeu les deux ailes 56a et 56b de la plaque 56.

Dans l'agencement qui vient d'être décrit en se référant aux figures 4 et 5, en cas de rupture de l'un des flancs 20a et 22a des pièces 20 et 22 formant la ferrure 16, le transfert des efforts et la liaison entre le moteur et le pylône 10 sont assurés par le bloc amortisseur 36, l'axe extérieur creux 42, l'autre flanc intact 20a ou 22a des pièces 20 et 22, la plaque 56 à section en forme de U, les boulons 24' et la partie centrale de la ferrure 16.

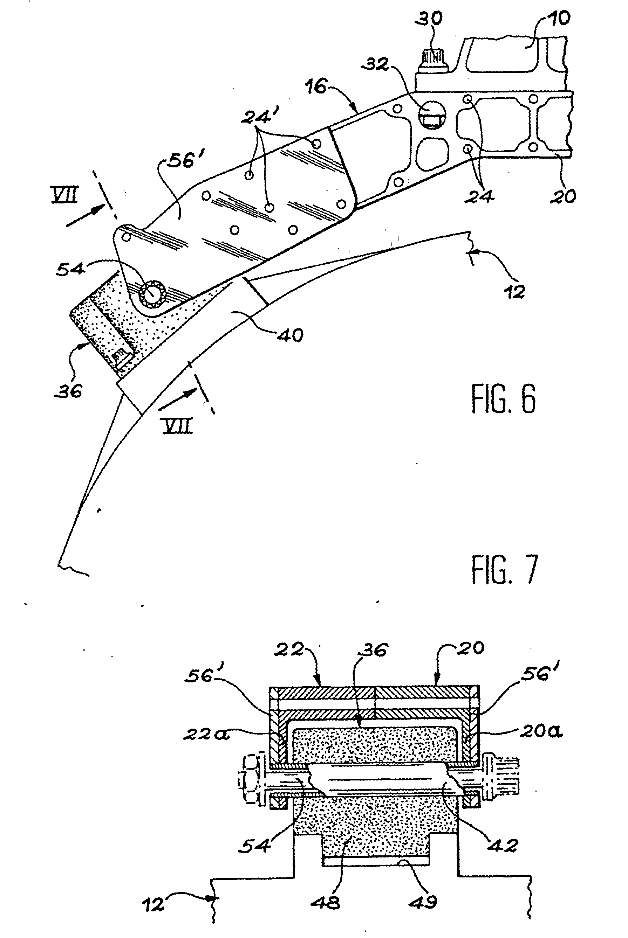

Dans la variante de la deuxième forme de réalisation illustrée sur les figures 6 et 7, la plaque 56 à section en forme de U est remplacée par deux plaques 56' sensiblement planes, fixées de part et d'autre des parties d'extrémité des pièces 20 et 22 de la ferrure 16, en dehors de la chape femelle formée dans cette dernière.

Les deux plaques 56' sont fixées aux pièces 20 et 22 par un ensemble de boulons 24', qui traversent successivement les flancs 20a et 20b formés dans les deux pièces et, de part et d'autre de ces flancs, les plaques 56', comme dans la variante précédente.

De même, l'axe extérieur creux 42 traverse sans jeu chacune des plaques 56', comme l'illustre bien la figure 7.

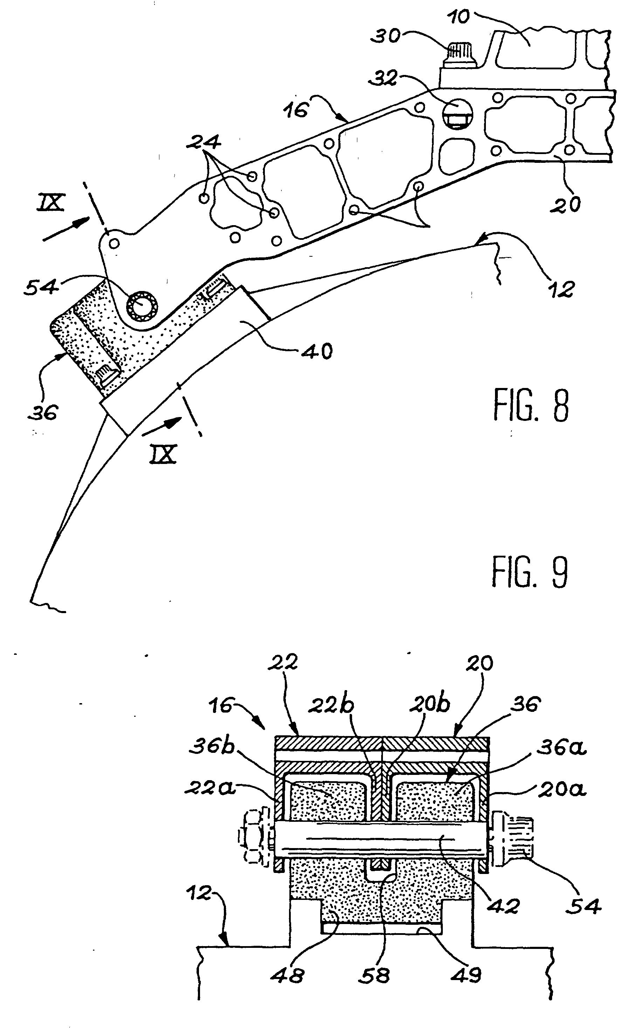

Dans la variante de la deuxième forme de réalisation illustrée sur les figures 8 et 9, les plaques 56 et 56' des deux précédentes variantes sont supprimées. Dans ce cas, le caractère redondant de la liaison entre le bloc amortisseur 36 et chacune des pièces 20 et 22 de la ferrure 16 est obtenu en réalisant une chape femelle dans chacune de ces pièces 20 et 22, comme l'illustre la figure 9. Les flancs adjacents 20b, 22b de ces chapes femelles pénètrent alors dans une saignée 58 formée dans le bloc amortisseur 36.

De façon plus précise et comme l'illustre la figure 9, l'axe extérieur creux 42 traverse alors successivement, sans jeu, le flanc 20a tourné vers l'extérieur de la ferrure de la chape formée dans la pièce 20, une première partie 36a du bloc amortisseur 36, les deux flancs adjacents 20b, 22b des chapes formées dans les pièces 20 et 22, une deuxième partie 36b du bloc amortisseur 36, et le flanc 22a, tourné vers l'extérieur de la ferrure, de la chape formée dans la pièce 22.

La réalisation d'une chape séparée dans chacune des pièces 20 et 22 de la ferrure permet d'assurer la redondance souhaitée. En effet, la rupture de l'une des pièces 20 et 22 n'entraînerait aucune interruption de la liaison entre le moteur et le pylône.

La description qui précède montre que, quelle que soit la forme de réalisation de l'invention, la liaison entre le moteur et le pylône lié à l'aéronef reste préservée en cas de rupture de l'une quelconque des pièces constitutives de ces dispositifs. Dans tous les cas, le dispositif d'accrochage reste donc opérationnel et conforme aux réglementations en vigueur. Ce résultat est obtenu en n'utilisant, sur le moteur, que les deux points d'accrochage habituellement employés avec les dispositifs existants.

Il est à noter que, dans la forme de réalisation décrite en se référant aux figures 1 à 3, le dispositif d'accrochage présente un encombrement moindre que celui décrit dans la forme de réalisation des figures 4 à 9, surtout aux emplacements des liaisons avec le moteur.

En revanche, la-deuxième forme de réalisation de l'invention permet de supprimer les plaques interposées entre les blocs amortisseurs et les embases liés au moteur. Cela élimine les jeux inhérents à cette solution et, par conséquent, simplifie le calcul des éléments constitutifs du dispositif et du moteur, du fait que, lorsqu'ils existent, ces jeux induisent un coefficient dynamique qui doit être pris en compte dans ce calcul.

## Revendications

1. Dispositif d'accrochage d'un moteur sur un pylône (10) fixé à un aéronef, ce dispositif comprenant une ferrure (16) sensiblement en arc de cercle, pourvue d'une partie centrale fixable au pylône (10) et de deux parties d'extrémité aptes à être reliées au moteur par des moyens de liaison (18), la partie centrale et les parties d'extrémité de la ferrure (16) étant formées à la fois dans deux portions élémentaires (20,22) de celle-ci, **caractérisé en ce que** ces deux portions élémentaires (20, 22) sont aptes à transmettre sans défaillance individuellement au pylône (10) les charges engendrées par le moteur, la ferrure (16) pouvant être reliée au moteur seulement par lesdits moyens de liaison (18) et chacun de ceux-ci incluant une pièce d'attente (44,54), non travaillante en fonctionnement normal, apte à transmettre lesdites charges en cas de rupture d'une autre pièce des moyens de liaison (18).

2. Dispositif selon la revendication 1, dans lequel les deux portions élémentaires de la ferrure (16) sont deux pièces séparées (20,22), reliées l'une à l'autre par des moyens de fixation (24) répartis sur toute la longueur de ces pièces.

3. Dispositif selon la revendication 2, dans lequel les moyens de fixation comprennent des boulons (24) qui traversent les deux pièces séparées (20,22) de la ferrure.

4. Dispositif selon l'une quelconque des revendications précédentes, dans lequel chacune des portions élémentaires (20,22) est fixée séparément au pylône (10) par au moins deux vis de traction (30).

5. Dispositif selon l'une quelconque des revendications précédentes, dans lequel chacun des deux moyens de liaison (18) comprend un bloc amortisseur (36), fixé au moteur par un ensemble de vis de traction (38), et pénétrant dans une chape femelle formée dans une partie d'extrémité correspondante de la ferrure (16), un axe (42), traversant sans jeu le bloc amortisseur (36) et, de part et d'autre de celui-ci, des flancs de ladite chape femelle, formés dans chacune des deux portions élémentaires (20,22) de la ferrure.

6. Dispositif selon la revendication 5, dans lequel la pièce d'attente, non travaillante, est une plaque (44), fixée entre le bloc amortisseur (36) et le moteur par ledit ensemble de vis de traction (38) et reliée aux deux portions élémentaires (20,22) de la ferrure (16) par une articulation avec jeu (50).

7. Dispositif selon la revendication 6, dans lequel l'articulation avec jeu est une articulation de type charnière (50), incluant des chapes multiples formées sur les deux pièces constituées par la pièce d'attente (44) et par la ferrure (16) et s'entrecroisant avec jeu, un deuxième axe (52) traversant les chapes multiples en étant fixé à l'une des deux pièces et traversant l'autre avec jeu.

8. Dispositif selon la revendication 5, dans lequel ledit axe est un axe extérieur creux (42), traversé avec jeu par un axe intérieur (54) formant la pièce d'attente, non travaillante.

9. Dispositif selon la revendication 8, dans lequel une plaque (56) à section en forme de U entoure simultanément les deux portions élémentaires (20,22) de la ferrure (16), à chaque partie d'extrémité de celle-ci incluant ladite chape femelle, ladite plaque (56) étant fixée aux deux portions élémentaires de la ferrure, en dehors de ladite chape, par une série de boulons (24') qui traversent successivement les deux portions élémentaires et, de part et d'autre de celles-ci, deux ailes (56a,56b) de ladite plaque (56), ledit axe extérieur creux (42) traversant également sans jeu chacune des ailes de la plaque (56).

10. Dispositif selon la revendication 8, dans lequel deux plaques (56') sensiblement planes sont fixées de part et d'autre de chaque partie d'extrémité de la ferrure (16), en dehors de ladite chape femelle, par un ensemble de boulons (24') qui traversent successivement les deux portions élémentaires (20,22) de la ferrure et, de part et d'autre de celles-ci, lesdites plaques, ledit axe extérieur creux (42) traversant également sans jeu chacune des plaques (56').

11. Dispositif selon la revendication 8, dans lequel chacune des portions élémentaires (20,22) de la ferrure comporte, à chaque partie d'extrémité de celle-ci, une chape femelle dans laquelle pénètre une partie (36a,36b) du bloc amortisseur (36), les deux chapes femelles et les deux parties du bloc amortisseur étant traversées par ledit axe extérieur creux (42).

## Patentansprüche

1. Vorrichtung zur Aufhängung eines Motors an einem an einem Luftfahrzeug befestigten Mast (10), wobei diese Vorrichtung eine Armierung (16) im wesentlichen in Kreisform umfaßt, die mit einem am Mast (10) befestigbaren zentralen Teil und zwei Endteilen versehen ist, welche mit dem Motor durch Verbindungsmittel (18) verbunden sein/werden können, wobei der zentrale Teil und die Endteile der Armierung (16) gleichzeitig aus zwei elementaren Abschnitten (20,22) derselben gebildet sind,
**dadurch gekennzeichnet, daß** diese beiden elementaren Abschnitte (20,22) einzeln auf den Mast (10) die vom Motor erzeugten Lasten ohne Ausfall übertragen können, wobei die Armierung (16) mit dem Motor nur durch die Verbindungsmittel (18) verbunden werden kann und jede derselben ein bei normaler Funktion nicht arbeitendes Bereitschaftsteil (44,54) aufweist, das die Lasten im Fall eines Bruchs eines anderen Teils der Verbindungsmittel (18) übertragen kann.

2. Vorrichtung nach Anspruch 1, wobei die beiden elementaren Abschnitte der Armierung (16) zwei getrennte Teile (20,22) sind, die miteinander durch Befestigungsmittel (24) verbunden sind, welche auf der gesamten Länge dieser Teile verteilt sind.

3. Vorrichtung nach Anspruch 2, wobei die Befestigungsmittel Bolzen (24) umfassen, welche die beiden getrennten Teile (20,22) der Armierung durchqueren.

4. Vorrichtung nach einem der vorangehenden Ansprüche, wobei jeder der elementaren Abschnitte (20,22) getrennt am Mast (10) durch mindestens zwei Zugschrauben (30) befestigt ist.

5. Vorrichtung nach einem der vorangehenden Ansprüche, wobei jedes der beiden Verbindungsmittel (18) einen Stoßdämpferblock (36), der am Motor durch eine Zugschraubeneinheit (38) befestigt ist und in einen in einem entsprechenden Endteil der Armierung (16) ausgebildeten Gabelkopf bzw. Schäkel penetriert, eine Achse (42), die ohne Spiel den Stoßdämpferblock (36) durchsetzt, und auf beiden Seiten desselben Flanken des weiblichen Gabelkopfs, welche in jeder der beiden elementaren Abschnitte (20,22) der Armierung ausgebildet sind, umfaßt.

6. Vorrichtung nach Anspruch 5, wobei das nicht arbeitende Bereitschaftsteil eine Platte (44) ist, die zwischen dem Stoßdämpferblock (36) und dem Motor durch die Zugschraubeneinheit (38) befestigt und mit den beiden elementaren Abschnitten (20,22) der Armierung (16) durch ein Gelenk mit Spiel (50) verbunden ist.

7. Vorrichtung nach Anspruch 6, wobei das Gelenk mit Spiel ein Gelenk von der Art eines Scharniers (50) ist, das eine Vielzahl von Schäkeln bzw. Gabelköpfen aufweist, die an den zwei durch das Bereitschaftsteil (44) und die Armierung (16) gebildeten und sich mit Spiel kreuzenden Teilen ausgebildet sind, wobei eine zweite Achse (52) die Vielzahl von Schäkeln bzw. Gabelköpfen durchsetzt und an einem dieser beiden Teile befestigt ist und den anderen mit Spiel durchsetzt.

8. Vorrichtung nach Anspruch 5, wobei die Achse eine äußere hohle Achse (42) ist, die mit Spiel von einer inneren Achse (54) durchsetzt ist, welche das nicht arbeitende Bereitschaftsteil bildet.

9. Vorrichtung nach Anspruch 8, wobei eine Platte (56) mit U-förmigem Querschnitt gleichzeitig die beiden elementaren Abschnitte (20,22) der Armierung (16) an jedem Endteil derselben mit dem weiblichen Schäkel bzw.Gabelkopf umgibt, wobei die Platte (56) an den beiden elementaren Abschnitten der Armierung außerhalb des Schäkels bzw.Gabelkopfs durch eine Reihe von Bolzen (24') befestigt ist, die nacheinander die beiden elementaren Abschnitte und auf beiden Seiten derselben zwei Flügel (56a,56b) der Platte (56) durchsetzen, wobei die äußere hohle Achse (42) auch jeden der Flügel der Platte (56) ohne Spiel durchsetzt.

10. Vorrichtung nach Anspruch 8, wobei die beiden im wesentlichen planen Platten (56') auf beiden Seiten jedes Endteils der Armierung (16) außerhalb des weiblichen Schäkels bzw. Gabelkopfs durch eine Einheit von Bolzen (24') befestigt sind, welche nacheinander die beiden elementaren Abschnitte (20,22) der Armierung und auf beiden Seiten derselben die Platten durchsetzen, wobei die äußere hohle Achse (42) ebenfalls ohne Spiel jede der Platten (56') durchsetzt.

11. Vorrichtung nach Anspruch 8, wobei jeder der elementaren Abschnitte (20,22) der Armierung an jedem Endteil derselben einen weiblichen Schäkel bzw. Gabelkopf umfaßt, in den ein Teil (36a,36b) des Stoßdämpferblocks (36) penetriert, wobei die beiden weiblichen Schäkel bzw. Gabelköpfe und die beiden Teile des Stoßdämpferblocks von der äußeren hohlen Achse (42) durchsetzt sind.

## Claims

1. Device for the attachment of an engine to a strut (10) fixed to an aircraft, said device comprising a substantially circular arc-shaped fitting (16) having a central part fixable to the strut (10) and two end parts connectable to the engine by connecting means (18), the central part and the end parts of the fitting (16) being formed both in two elementary portions (20, 22) thereof, **characterized in that** said elementary portions (20, 22) are able to individually transmit without fail to the strut (10) the stresses produced by the engine, the fitting (16) being connected to the engine solely by said connecting means (18), and each of them including a holding part, which is non-working in normal operation, being able to transmit said stresses in the case of the fracture of another part of said connecting means (18).

2. Device according to claim 1, wherein the two elementary portions of the fitting (16) are two separate parts (20, 22), connected to one another by fixing means (24) distributed over the entire length of these parts.

3. Device according to claim 2, wherein the fixing means comprise bolts (24) traversing the two separate parts (20, 22) of the fitting.

4. Device according to any one of the preceding claims, wherein each of the elementary portions (20, 22) is separately fixed to the strut (10) by at least two tension screws (30).

5. Device according to any one of the preceding claims, wherein each of the two connecting means (18) comprises a shock absorber block (36), fixed to the engine by a system of tension screws (38), and penetrating a female fork formed in a corresponding end part of the fitting (16), a spindle (42), traversing without clearance the shock absorber block (36) and, on either side of the latter, flanks of said female fork, formed in each of the two elementary portions (20, 22) of the fitting.

6. Device according to claim 5, wherein the non-working, holding part is a plate (44), fixed between the shock absorber block (36) and the engine by said system of tension screws (38) and connected to the two elementary portions (20, 22) of the fitting (16) by a joint with clearance (50).

7. Device according to claim 6, wherein the joint with clearance is a hinge-type joint (50), including multiple forks formed on the two parts constituted by the holding part (44) and the fitting (16) and which intersect with clearance, a second spindle (52) traversing the multiple forks being fixed to one of the parts and traversing the other with clearance.

8. Device according to claim 5, wherein said spindle is a hollow, external spindle (42), traversed with clearance by an internal spindle (54) forming the non-working, holding part.

9. Device according to claim 8, wherein a plate (56) with a U-shaped cross-section simultaneously surrounds the two elementary portions (20, 22) of the fitting (16), at each end part thereof, including said female fork, said plates (56) being fixed to the two elementary portions of the fitting, apart from said fork, by a series of bolts (24') successively traversing the two elementary portions and, on either side thereof, two flanges (56a, 56b) of said plate (56), said hollow, external spindle (42) also traversing without clearance each of the flanges of the plates (56).

10. Device according to claim 8, wherein two substantially planar plates (56') are fixed on either side of each end portion of the fitting (16), apart from said female fork, by a system of bolts (24') successively traversing the two elementary portions (20, 22) of the fitting and, on either side thereof, said plates, said hollow, external spindle (42) also traversing without clearance each of the plates (56').

11. Device according to claim 8, wherein each of the elementary portions (20, 22) of the fitting has, at each end part thereof, a female fork penetrated by a portion (36a, 36b) of the shock absorber block (36), the two female forks and the two portions of the shock absorber block being traversed by said hollow, external spindle (42).
